# EUROPEAN PATENT APPLICATION

(11) **EP 1 150 050 A2**
(43) Date of publication of application: **31.10.2001**
(21) Application number: 01500106.8
(22) Date of filing: 20.04.2001
(51) Int. Cl.: F16K 11/074

(54) **A distributor for liquids**

(30) Priority: 26.04.2000 ES 200001060
(71) Applicant: Valvules I Racords Canovelles, S.A., 08150 Parets Del Valles (Barcelona) (ES)
(72) Inventor: Ibanez Sapina, Miguel Valvules i Racords, 08150 Parets del Valles (Barcelona) (ES)
(74) Representative: Pastells Teixido, Manuel

(57) **Abstract**

The distributor comprises a compartmented base body (1) having several outlets (2) and a lateral inlet for the liquid, a cover (3) being secured on top of said base body, this latter housing in its inside a rotatable obturator bell (5) governed by a control means being external to the cover. This distributor is characterized in that an apertured disc (9) is fitted onto the compartments of the base body, and another apertured disc (9) is fitted to the open bottom of the obturator bell and rotates with this latter, the opposite surfaces of these two discs being smoothed up in order to thus obtain between said discs a tightly abutting arrangement. Each of said two apertured discs is fitted onto the base body and onto the obturator bell, respectively, with the intermediary of a seal, and said obturator bell is provided with resilient means causing the disc being fitted to said bell to exert a pressure against the disc being fitted to the base body.

## Description

The distributor being proposed by the invention is of the type formed by a base body being radially compartmented as per the intended application and provided with the pertinent outlets, a cover forming a receptacle being secured on top of said body, a rotatable obturator bell being innerly interposed between body and cover and being provided with a communication opening serving to communicate with the compartments of the base body, said bell being governed by an external control means.

This kind of distributors have so far comprised an obturator bell provided with a centrally located vertical shaft being axially movable in a guided arrangement, in such a way that in order to rotate said obturator bell this latter had to be lifted by means of the external control means thus overcoming the resistance of a spring, and after the rotation said control means was released thus causing said spring to when recovering again apply the obturator bell onto the compartments of the base body.

It is the object of this invention to simplify the action to be exerted on the obturator bell in such a way that this latter can be rotated without having to lift it off the open top of the compartments, i.e. that said bell is effectively rotated by means of directly causing it to slide on said open tops.

This distributor is for such a purpose characterized in that an apertured disc is fitted onto the compartments of the base body, and another apertured disc is fitted onto the open bottom of the obturator bell and rotates with this latter, the opposite surfaces of both discs being smoothed up in order to thus obtain between said discs a tightly abutting arrangement, said discs preferably being ceramic, although they could also be made of stainless steel, glass or another material suitably serving said purpose.

Each of said two apertured discs is fitted onto the base body and onto the obturator bell, respectively, with the intermediary of a tightly fitted seal.

The disc being fitted to the obturator bell exerts a resilient pressure against the disc being fitted to the base body, said bell being for such a purpose provided with means to provide said pressure.

The rotation of the obturator bell can be produced manually for such a purpose for example using an external control means fitted to a shaft solidly fitted to the bell and upperly projecting from the cover forming a receptacle, or automatically by means of an electric system, for example.

This distributor for liquids can be used in different applications, a preferential one being its use with swimming pool water filters.

These and other characteristics will be best made apparent by the following detailed description whose understanding will be made easier by the accompanying two sheets of drawings showing a practical embodiment cited only by way of an example not limiting the scope of the present invention.

In the drawings:

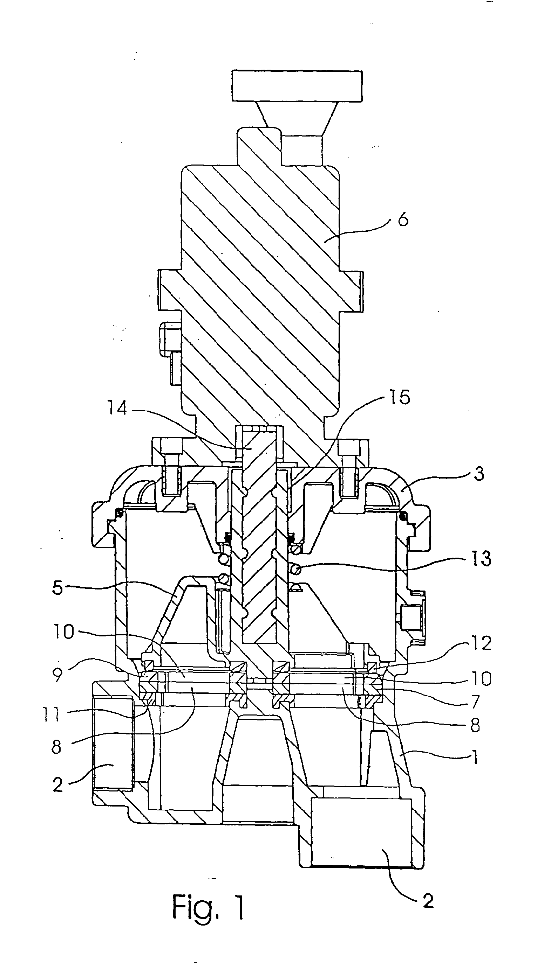

Fig. 1 illustrates in a sectional elevation the distributor for liquids being the object of the present invention;

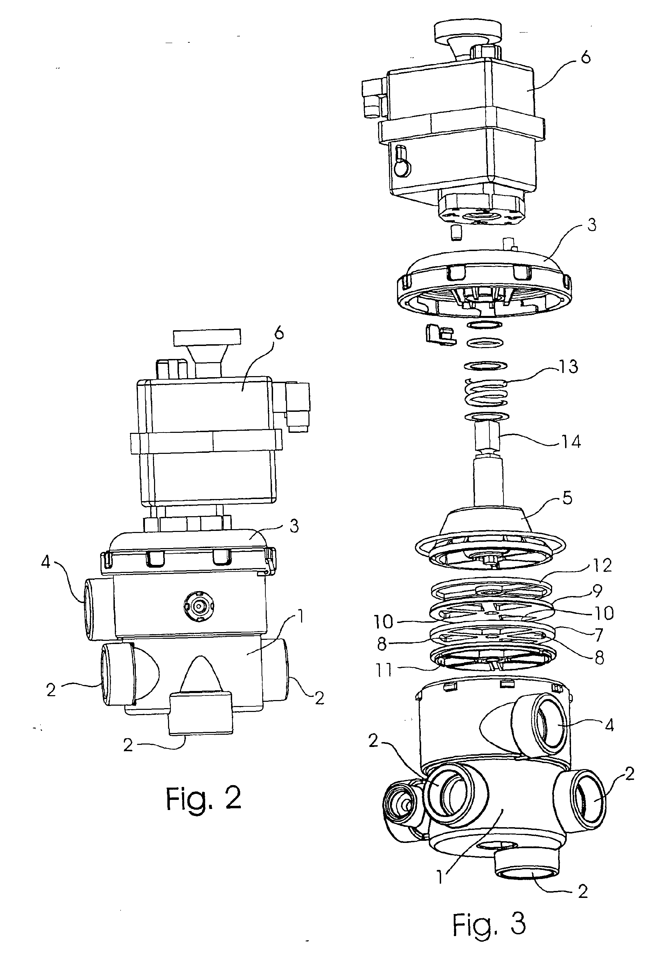

Fig. 2 shows said distributor in an elevational view at a smaller scale; and
Fig. 3 represents this distributor in a perspective, exploded view.

According to the drawings this distributor for liquids comprises a compartmented base body 1 having several outlets 2 and a lateral inlet 4 for the liquid, a cover 3 being secured on top of said base body.

Inside said base body 1 is arranged a rotatable obturator bell 5 being governed by a control means 6 being external to the cover 3.

A disc 7 provided with apertures 8 is fitted onto the compartments of the base body 1, and another disc 9 provided with apertures 10 is fitted to the open bottom of the obturator bell 5 and rotates with this latter, the opposite surfaces of these two discs being smoothed up in order to thus obtain between said discs a tightly abutting arrangement.

Each of said two discs 7 and 9 is fitted onto the base body 1 and onto the obturator bell 5, respectively, with the intermediary of a doubly annular seal 11 and 12 provided with radial lengths, the bell being provided with resilient means 13 causing the disc 9 being fitted to said bell to exert a pressure against the disc 7 being fitted to the base body 1.

The obturator bell 5 is rotationally actuated by automatically operating, external control means 6 being provided with an electric gearmotor and fitted to a shaft 14 being solidly fitted to the bell and upperly projecting from the cover 3 through a central orifice 15 provided in this latter.

## Claims

1. A distributor for liquids comprising a compartmented base body having several outlets and the lateral inlet for the liquid, a cover forming a receptacle being secured on top of said base body, a rotatable obturator bell being interposed between said base body and said cover and being governed by a control means being external to the cover forming a receptacle; **characterized in that** an apertured disc is fitted onto the compartments of the base body, and another apertured disc is fitted to the open bottom of the obturator bell and rotates with this latter, the opposite surfaces of these two discs being smoothed up in order to thus obtain between said discs a tightly abutting arrangement.

2. A distributor for liquids as per claim 1, **characterized in that** each of said two apertured discs is fitted onto the base body and onto the obturator bell, respectively, with the intermediary of a seal.

3. A distributor for liquids as per claim 1, **characterized in that** the obturator bell is provided with resilient means causing the disc being fitted to said bell to exert a pressure against the disc being fitted to the base body.

4. A distributor for liquids as per claim 1, **characterized in that** the rotational actuation of the obturator bell is carried out manually by means of an external control means fitted to a shaft solidly fitted to the bell and upperly 'projecting from the cover forming a receptacle.

5. A distributor for liquids as per claim 1, **characterized in that** the obturator bell is rotationally actuated by automatically operating means.
